# EUROPEAN PATENT SPECIFICATION

(11) **EP 1 421 303 B1**
(45) Date of publication and mention of the grant of the patent: **08.06.2005**
(21) Application number: 02760396.8
(22) Date of filing: 23.08.2002
(51) Int. Cl.: F16K 1/226, B65D 77/22

(54) **VALVE ASSEMBLY FOR CONTAINERS**
VENTILANORDNUNG FÜR BEHÄLTER
ENSEMBLE SOUPAPE POUR CONTENANTS

(30) Priority: 25.08.2001 GB 0120726
(43) Date of publication of application: 26.05.2004
(73) Proprietor: Arena IBC Limited, Mansfield, Nottinghamshire NG19 7JY (GB)
(72) Inventor: BRIMSON, Michael, Ronald, Nottinghamshire NG16 6FB (GB)
(74) Representative: Tranter, Andrew David
(86) International application number: PCT/GB2002/003870
(87) International publication number: WO 2003/019055

(56) References cited:
- DE-A- 2 848 737
- DE-A- 4 240 544
- DE-U- 29 922 090
- FR-A- 669 260
- FR-A- 2 593 264
- US-A- 3 191 906
- US-A- 3 290 001
- US-A- 4 284 104

## Description

This invention relates to valve assemblies for containers, particularly to valves usually of plastics material, for use with disposable liner bags for containers. Such valves are preferably fabricated as cheaply as possible as they are usually disposed of with the liner bag, and the liner bags may typically contain up to or over 1000 litres of liquid goods.

A known form of valve for this use is attached or attachable to the wall of the bag, and includes a circular blade which is pushed into the wall of the bag to cut out a circular aperture in the manner of a pastry cutter, thus creating an outlet from the bag, which is previously sealed to be controlled by operation of the valve. See for example US 5482176 and WO99/51504.

It is also known to provide valves which are built into the bag, with the edges of a preformed aperture in the wall being sealed to the valve housing, and the bag being sealed by the valve apparatus only.

In either case, it may not be apparent whether the valve has been operated to break the bag wall, or to allow some of the contents of the bag to be drawn off. Equally, inlet caps closed after filling of the container may not show whether they have been re-opened, for example with the risk of deliberate or accidental contamination of the contents of the container.

Containers having a closure from which it is evident that the closure has or has not been opened or tampered with prior to first authorised opening of the container are known for example from US 5456374 where a closure cap for a valve has a detachable ring connected to the main part of the cap by frangible connections so that twisting of the cap to open the same will sever the connections leaving the ring separate from the cap.

The valve member in such a simple disposable valve may be a simple rotatable disk or butterfly valve, mounted on a spindle which is rotatably mounted in a spigot or neck. This form of valve however, once the end cap has been opened may not provide complete sealing of the spigot between using the valve to draw off material from the container.

A valve of this type is known from the documents US 3 290 001 and DE 2 848 737.

It is an object of the invention to provide a more effective type of valve closure which is nevertheless still low cost, to maintain sealing closure of the container after first opening of the valve closure and between uses of the valve.

According to the invention a valve assembly for a container comprises a generally cylindrical passage member having a flange for attachment to the wall of a container surrounding an aperture in the wall of the container through which the passage member extends including a disc-shaped valve member having a domed surface presenting a convex surface to the interior of the container, wherein the passage member has an outer end which is closed by a tamper-evident diaphragm closure.

The valve member is preferably off-set with respect to an axis of rotation thereof defined by trunnion bearings in the passage member. One such bearing may be a stub shaft carried in an arm integrally formed with the valve member and received in a blind bore or recess in the wall of the passage member.

Another bearing may comprise a shaft which extends outwardly through the wall of the passage member at a point diametrically opposed to the stub shaft and the protruding end can be engaged by an appropriately keyed lever for engaging key means, such as a specific geometric shape or splines or studs, provided on the protruding end of the shaft. The shaft may be formed separately from the valve member and engage therewith by means of an appropriately shaped or keyed end engaging in a corresponding shaped or keyed aperture in the valve member structure.

The passage member may be provided with a recess adapted to receive a protrusion or tab provided on the valve member, or the tab may be provided on the passage member with a recess in the valve member. The engagement of the tab within the recess limits the movement of the valve member, preventing it from completely rotating past a predefined limit.

The valve member may have an upper or outer surface which is concave and defines a raised rim which cooperates with a valve seat defined by the passage member. The valve member may also be provided with a sealing member to reduce passage of the contents of the container passing the valve member in use of the valve assembly in a closed position. The sealing member may be formed about the outer surface of the valve member. The sealing member may be an o-ring held in a circumferential recess in the valve member. Alternatively, the sealing member may be an overmoulding of sealing material circumferentially about the valve member. This overmoulding may comprise an injection moulding and may comprise rubber or any substance suitably resistant to the intended contents of the container.

Furthermore, a spindle sealing member may be provided, which seals the passages through which the shaft passes through the passage member. This may be of the form of an overmoulding, typically an injection moulding, which may be of rubber or any suitably resistant material.

The tamper-evident diaphragm closure can extend across the outer end and preferably has a frangible connection to the rim of the outer end, and may have a pull tab for opening the closure diaphragm. The pull tab may be recessed into the surface of the diaphragm and may be removable to enable a hole to be punched manually through the thinner diaphragm part exposed thereby, to obtain leverage to open the diaphragm, or may itself provide leverage for pulling open of the diaphragm.

The accompanying drawings illustrate a preferred embodiment of the invention, which is described by way of example only.

In the drawings:
**Figure 1** is a sectional view of a valve assembly according to the invention;
**Figure 2** is an external perspective view of the valve assembly of Figure 1;
**Figure 3** is a perspective view of a valve member used in the valve assembly of Figures 1 and 2;
**Figure 4** is an external perspective view of an alternative valve member used in a valve assembly according to the invention; and
**Figure 5** is an external perspective view of an alternative passage member according to the present invention.

The valve assembly of the invention shown in the drawings comprises a generally cylindrical passage member 10 which has a base flange 11 which can be engaged with the walls of a container from inside the container, with the cylindrical part of the passage member 10 extending out from an aperture 13 in the container wall.

The passage member 10 has an open end 14 which is closed by a removable diaphragm 15, connected to the rim of the open end 14 by a frangible connection 16. A pull tab 17 is provided which is normally laid flat in recess 18 but can be lifted to the position shown by engagement with fingers, and then pulled to break the connection 16 and enable removal of the diaphragm 15. The diaphragm 15 must be removed before material such as liquid can be dispensed through the valve, and provides a tamper-evident closure which will show whether there has been any attempt to open the valve and remove material from the container.

The valve assembly also comprises a valve member 20 which is in the form of an axially eccentric disc or butterfly valve. The valve member 20 comprises a valve disc 21 which presents a convex domed surface 22 inwardly towards the container, and a recessed surface 23 outwardly, and thus provides a raised rim 24 which engages with a curved valve seat provided in the walls of the passage member 10, with a seal ring 25 in the rim 24 of the disc 21.

The valve member 20 also comprises a lug 26 with a stub shaft trunnion bearing 27 which engages in a corresponding recess in the passage member wall. A second lug 28 is provided diametrically opposite lug 26, which has an aperture 29 for a shaft 30 which has a square head 31 which fits in a recess 32 in the lug 28. Shaft 30 extends out through the wall of the passage member via a cylindrical bearing 33, and has an end 34 which is suitably keyed to engage a removable operating handle 35. This latter feature ensures that the valve can only be conveniently operated with a correctly keyed handle 35, thereby increasing security of the contents. Keying may be achieved by means of variations in the number and proportion of facets, or the arrangement of splines and studs.

The parts of the valve assembly are all moulded from suitable plastics materials, including the shafts and bearings which may for example be of polyamide coated with a fluoro-carbon material to be self lubricating.

The valve assembly allows an increase in the security of the container closure, which is tamper evident whilst still retaining the advantages of cheap manufacture to enable the assembly to be used with disposable containers such as tank lining bags.

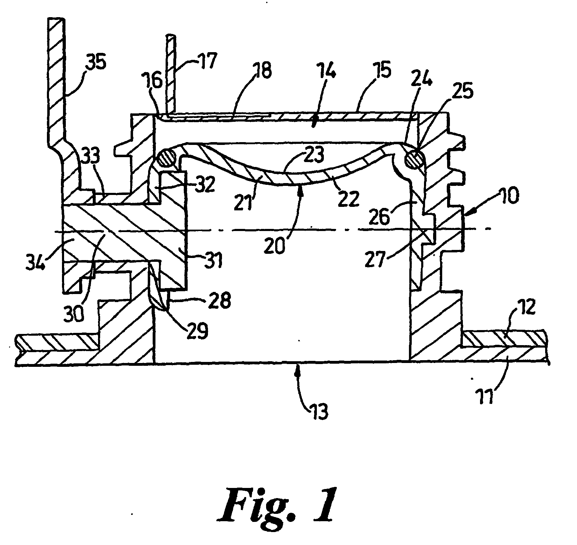

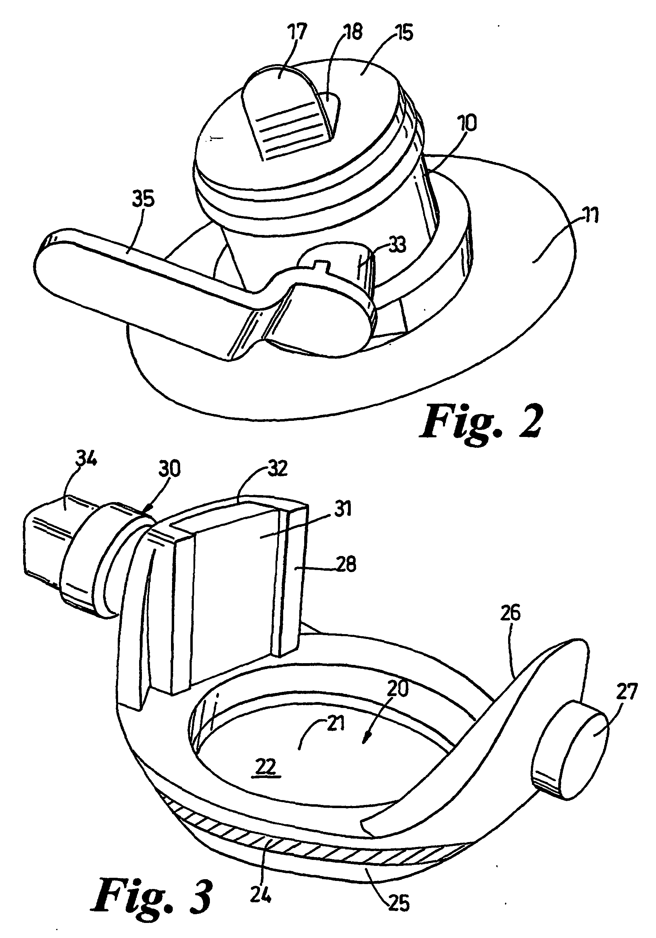

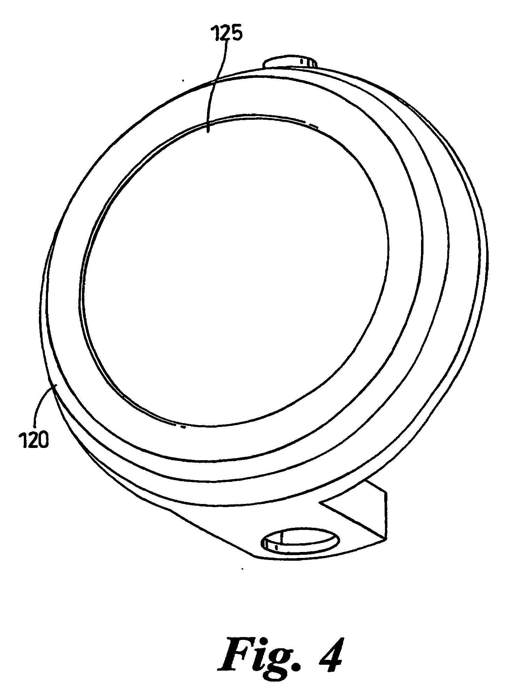

An alternative valve member 120 is shown in Figure 4 of the accompanying drawings. It is identical to that of Figures 1 to 3 of the accompanying drawings except for the provision of an overmoulding 125 replacing the seal ring 25 of Figures 1 to 3. This overmoulding 125 is of the form of an injection moulding circumferentially around the edge of the valve member 120. It is envisaged that the overmoulding 125 would be of rubber, but may also be of any suitable material chosen with regards to the nature of the material to be stored within the container.

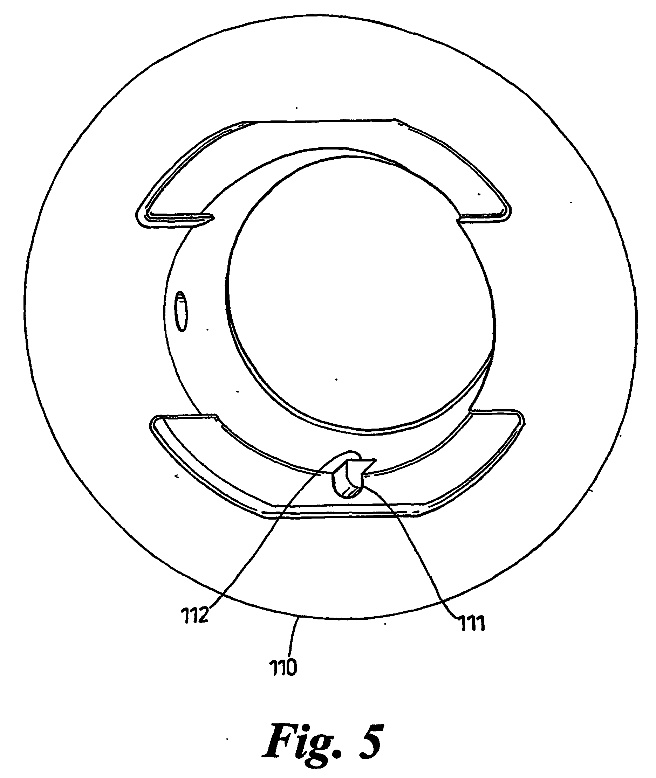

An alternative passage member 110 is shown in Figure 5 of the accompanying drawings. This is substantially the same as the passage member 10 of the embodiment of Figures 1 to 3 of the accompanying drawings except for provision of a recess 111 in the wall of the passage member, circumferentially half way between the recesses for the shafts of the valve members. The recess is of semi-circular cross section and extends partway along the length of the passage member terminating with a stop wall 112. A corresponding tab (not shown) on the valve member positioned to cooperate with the recess 111 such that the stop wall 112 prevents passage of the tab past a point. Accordingly, rotation of the valve member is stopped at a point defined by the stop wall 112, which provides for a repeatable sealing position.

## Claims

1. A valve assembly for a container comprising a generally cylindrical passage member having a flange for attachment to the wall of a container surrounding an aperture in the wall of the container through which the passage member extends including a disc-shaped butterfly valve member having a domed surface presenting a convex surface to the interior of the container, **characterised in that** the passage member has an outer end which is closed by a tamper-evident diaphragm closure.

2. A valve assembly according to claim 1 in which the valve member is off-set with respect to an axis of rotation thereof defined by trunnion bearings in the passage member.

3. A valve assembly according to claim 2 in which one of the trunnion bearings is a stub shaft carried in an arm integrally formed with the valve member and received in a blind bore or recess in the wall of the passage member.

4. The valve assembly of claim 3 in which one other of the trunnion bearings comprises a shaft which extends outwardly through the wall of the passage member at a point diametrically opposed to the stub shaft and the protruding end can be engaged by an appropriately keyed lever for engaging key means provided on the protruding end of the shaft.

5. The valve assembly of claim 4 in which the shaft is formed separately from the valve member and engages therewith by means of an appropriately shaped or keyed end engaging in a corresponding shaped or keyed aperture in the valve member structure.

6. A valve assembly according to any preceding claim in which the passage member is provided with a recess adapted to receive a protrusion or tab provided on the valve member, or the tab may be provided on the passage member with a recess in the valve member.

7. A valve assembly according to any preceding claim in which the valve member is provided with a sealing member to reduce passage of the contents of the container in use of the valve assembly in a closed position.

8. A valve assembly according to claim 7 in which the sealing member is an o-ring held in a circumferential recess in the valve member.

9. A valve assembly according to claim 7 in which the sealing device is an overmoulding of sealing material circumferentially about the valve member.

10. A valve assembly according to claim 9 in which the overmoulding is an injection moulding.

11. A valve assembly according to claim 9 or claim 10 in which the sealing material is rubber.

12. A valve assembly according to claim 4 or any of claims 5 to 11 when dependent from claim 4, in which a spindle sealing member is provided, which seals the passage through which the shaft passes through the passage member.

13. A valve assembly according to claim 12 in which the spindle sealing member is an overmoulding.

14. The valve assembly of any preceding claim in which the closure diaphragm extends across the outer end and has a frangible connection to the rim of the outer end.

15. The valve assembly of claim 14 in which the closure diaphragm has a pull tab for opening the closure diaphragm.

16. The valve assembly of claim 15 in which the pull tab is recessed into the surface of the diaphragm and may be removable to enable a hole to be punched manually through a thinner diaphragm part exposed thereby, to obtain leverage to open the diaphragm.

17. A valve assembly according to claim 16 in which the pull tab itself provides leverage for pulling open of the diaphragm.

18. A disposable flexible liner bag for a fluid container that is equipped with a valve assembly according to any preceding claim.

## Patentansprüche

1. Ventilanordnung für einen Behälter mit einem allgemein zylindrischen Durchgangselement mit einem Flansch zur Befestigung an der Wand eines Behälters, die eine Öffnung in der Wand des Behälters umgibt, durch welche sich das Durchgangselement erstreckt, mit einem scheibenförmigen Ventilklappenelement mit einer gewölbten Fläche, die dem Innern des Behälters eine konvexe Fläche darbietet,
**dadurch gekennzeichnet,**
**dass** das Durchgangselement ein äußeres Ende aufweist, das durch einen einen unbefugten Eingriff offenbarenden Federplattenverschluss verschlossen ist.

2. Ventilanordnung nach Anspruch 1, bei welcher das Ventilelement bezüglich einer Drehachse davon, die durch Zapfenlager in dem Durchgangselement definiert ist, versetzt ist.

3. Ventilanordnung nach Anspruch 2, bei welcher eines der Zapfenlager eine Flanschwelle ist, die in einem integral mit dem Ventilelement ausgebildeten Arm gehalten und in einer Sackbohrung oder Ausnehmung in der Wand des Durchgangselements aufgenommen ist.

4. Ventilanordnung nach Anspruch 3, bei welcher ein anderes der Zapfenlager eine Welle aufweist, die sich an einem Punkt diametral abgewandt zur Flanschwelle durch die Wand des Durchgangselements nach außen erstreckt, wobei das vorstehende Ende durch einen geeignet verkeilten Hebel zum Eingriff einer an dem vorstehenden Ende der Welle vorgesehenen Keileinrichtung gegriffen ist.

5. Ventilanordnung nach Anspruch 4, bei welcher die Welle separat von dem Ventilelement ausgebildet ist und damit mittels eines geeignet geformten oder verkeilten Endes, das in eine entsprechende Form- oder Keilöffnung in der Ventilelementkonstruktion eingreift, in Eingriff steht.

6. Ventilanordnung nach einem der vorhergehenden Ansprüche, bei welcher das Durchgangselement mit einer Ausnehmung versehen ist, die zum Aufnehmen eines an dem Ventilelement vorgesehenen Vorsprungs oder Lappens geeignet ist, oder der Lappen an dem Durchgangselement mit einer Ausnehmung im Ventilelement vorgesehen sein kann.

7. Ventilanordnung nach einem der vorhergehenden Ansprüche, bei welcher das Ventilelement mit einem Dichtungselement versehen ist, um einen Durchtritt der Inhalte des Behälters bei Gebrauch mit der Ventilanordnung in einer geschlossenen Stellung zu reduzieren.

8. Ventilanordnung nach Anspruch 7, bei welcher das Dichtungselement ein in einer Umfangsausnehmung in dem Ventilelement gehaltener O-Ring ist.

9. Ventilanordnung nach Anspruch 7, bei welcher das Dichtungselement eine Überformung von Dichtungsmaterial umfänglich um das Ventilelement ist.

10. Ventilanordnung nach Anspruch 9, bei welcher die Überformung eine Einspritzformung ist.

11. Ventilanordnung nach Anspruch 9 oder 10, bei welcher das Dichtungsmaterial Gummi ist.

12. Ventilanordnung nach Anspruch 4 oder einem der Ansprüche 5 bis 11 bei Abhängigkeit von Anspruch 4, bei welcher ein Spindeldichtungselement vorgesehen ist, das den Durchgang abdichtet, durch den die Welle durch das Durchgangselement läuft.

13. Ventilanordnung nach Anspruch 12, bei welcher das Spindeldichtungselement eine Überformung ist.

14. Ventilanordnung nach einem der vorhergehenden Ansprüche, bei welcher sich der Federplattenverschluss über das äußere Ende erstreckt und eine zerbrechliche Verbindung mit dem Rand des äußeren Endes besitzt.

15. Ventilanordnung nach Anspruch 14, bei welcher der Federplattenverschluss einen Zuglappen zum Öffnen des Federplattenverschlusses aufweist.

16. Ventilanordnung nach Anspruch 15, bei welcher der Zuglappen in die Oberfläche der Federplatte eingelassen ist und entfernt werden kann, um ein manuelles Drücken eines Lochs durch einen **dadurch** freigelegten dünneren Federplattenteil zu ermöglichen, um eine Hebelkraft zum Öffnen der Federplatte zu erhalten.

17. Ventilanordnung nach Anspruch 16, bei welcher der Zuglappen selbst die Hebelkraft zum Aufziehen der Federplatte vorsieht.

18. Elastische Einweg-Futtertasche für einen Fluidbehälter, der mit einer Ventilanordnung nach einem der vorhergehenden Ansprüche ausgestattet ist.

## Revendications

1. Ensemble de soupape pour contenant comprenant un élément formant passage généralement cylindrique présentant une bride en vue de la fixation à la paroi d'un contenant entourant une ouverture dans la paroi du contenant, à travers laquelle s'étend l'élément formant passage comprenant un élément formant soupape papillon en forme de disque possédant une surface bombée présentant une surface convexe en direction de l'intérieur du contenant, **caractérisé en ce que** l'élément formant passage présente une extrémité extérieure qui est fermée par une membrane de fermeture inviolable.

2. Ensemble de soupape selon la revendication 1, **caractérisé en ce que** l'élément formant soupape est décalé par rapport son un axe de rotation défini par des paliers à tourillon dans l'élément formant passage.

3. Ensemble de soupape selon la revendication 2, **caractérisé en ce qu'**un des paliers à tourillon est un faux arbre porté dans un bras faisant partie intégrante de l'élément de soupape et reçu dans un trou borgne ou évidement dans la paroi de l'élément formant passage.

4. Ensemble de soupape selon la revendication 3, **caractérisé en ce qu'**un autre des paliers à tourillon comprend un arbre qui s'étend vers l'extérieur à travers la paroi de l'élément formant passage en un point diamétralement opposé aux faux arbre et l'extrémité en saillie peut être mise en prise par un levier claveté de manière appropriée destiné à mettre en prise des moyens formant clavette prévus sur l'extrémité en saillie de l'arbre.

5. Ensemble de soupape selon la revendication 4, **caractérisé en ce que** l'arbre est formé séparément de l'élément formant soupape et se met en prise avec celui-ci au moyen d'une extrémité clavetée ou formée de manière appropriée se mettant en prise dans une ouverture formée ou clavetée correspondante dans la structure de l'élément formant soupape.

6. Ensemble de soupape selon l'une quelconque des revendications précédentes, **caractérisé en ce que** l'élément formant passage est pourvu d'un évidement adapté pour recevoir une protubérance ou une languette prévue sur l'élément formant soupape, ou la languette peut être pourvue sur l'élément formant passage d'un évidement dans l'élément formant soupape.

7. Ensemble de soupape selon l'une quelconque des revendications précédentes, **caractérisé en ce que** l'élément formant soupape est pourvu d'un élément d'étanchéité pour réduire le passage du contenu du contenant lorsque l'ensemble de soupape est utilisé dans une position fermée.

8. Ensemble de soupape selon la revendication 7, **caractérisé en ce que** l'élément d'étanchéité est un joint torique maintenu dans un évidement circonférentiel dans l'élément formant soupape.

9. Ensemble de soupape selon la revendication 7, **caractérisé en ce que** le dispositif d'étanchéité est un surmoulage de matériau d'étanchéité circonférentiel autour de l'élément formant soupape.

10. Ensemble de soupape selon la revendication 9, **caractérisé en ce que** le surmoulage est un moulage par injection.

11. Ensemble de soupape selon la revendication 9 ou la revendication 10, **caractérisé en ce que** le matériau d'étanchéité est du caoutchouc.

12. Ensemble de soupape selon la revendication 4 ou selon l'une quelconque des revendications 5 à 11 dépendante de la revendication 4, **caractérisé en ce qu'**il est y prévu un matériau d'étanchéité de broche, qui étanchéifie le passage à travers lequel l'arbre traverse l'élément formant passage.

13. Ensemble de soupape selon la revendication 12, **caractérisé en ce que** l'élément d'étanchéité de tige est un surmoulage.

14. Ensemble de soupape selon l'une quelconque des revendications précédentes, **caractérisé en ce que** la membrane de fermeture s'étend sur l'extrémité extérieure et présente un raccord cassant par rapport au rebord de l'extrémité extérieure.

15. Ensemble de soupape selon la revendication 14, **caractérisé en ce que** la membrane de fermeture présente une tirette destinée à ouvrir la membrane de fermeture.

16. Ensemble de soupape selon la revendication 15, **caractérisé en ce que** la tirette est évidée à l'intérieur de la surface de la membrane et peut être retirée pour permettre de poinçonner manuellement un trou à travers une partie plus mince de la membrane de ce fait exposée, pour obtenir la force de levier destinée à ouvrir la membrane.

17. Ensemble de soupape selon la revendication 16, **caractérisé en ce que** la tirette fournit pour sa part la force de levier destinée à ouvrir la membrane par traction.

18. Sac à doublure flexible jetable pour un contenant de fluide **caractérisé en ce qu'**il est équipé d'un ensemble de soupape selon l'une quelconque des revendications précédentes.
